# EUROPÄISCHE PATENTANMELDUNG

(11) **EP 1 138 537 A2**
(43) Veröffentlichungstag der Anmeldung: **04.10.2001**
(21) Anmeldenummer: 01107723.7
(22) Anmeldetag: 30.03.2001
(51) Int. Cl.: B60J 10/00, B60R 13/06

(54) **Lamellenband**

(30) Priorität: 31.03.2000 DE 10016199; 10.07.2000 DE 10033454
(71) Anmelder: Steinl, Alfred, 84032 Altdorf (DE)
(72) Erfinder: Steinl, Alfred, 84032 Altdorf (DE)
(74) Vertreter: VOSSIUS & PARTNER

(57) **Zusammenfassung**

Band mit mehreren Lamellen, die jeweils über ein erstes Verbindungselement miteinander verbunden sind, wobei jede Lamelle zwei einander gegenüberliegende Lamellenschenkel aufweist, wobei jede Lamelle mindestens zwei Aussparungen aufweist, die sich quer zur Längsachse des Bandes strecken, wobei zwischen den Aussparungen mindestens ein zweites Verbindungselement ausgebildet ist.

## Beschreibung

Die vorliegende Erfindung betrifft ein Lamellenband bestehend aus mehreren nacheinander angeordneten Lamellen. Die Erfindung betrifft weiter ein Profil, das aus einem solchem Lamellenband hergestellt wird und vorzugsweise U- oder V-förmig ist. Die Erfindung betrifft weiter eine Vorrichtung zur Herstellung eines derartigen Lamellenbandes und des zugehörigen Gerüstbandes und ein entsprechendes Herstellungsverfahren.

Es sind Lamellenbänder bekannt, die als Verstärkungseinlage für im Querschnitt U-förmig oder V-förmig profilierte Profilleisten aus Gummi oder Kunststoff eingesetzt werden.

Der vorliegenden Erfindung liegt die Aufgabe zugrunde, ein verbessertes Band bestehend aus Lamellen bereitzustellen sowie ein daraus hergestelltes Gerüstband, eine Vorrichtung und ein Verfahren zur Herstellung eines derartigen Bandes sowie des zugehörigen Gerüstbandes bereitzustellen.

Diese Aufgabe wird mit den Merkmalen der Patentansprüche gelöst. Die Erfindung und die bevorzugten Ausführungsformen der Erfindung, die in den abhängigen Ansprüchen angegeben sind, hat insbesondere den Vorteil, einer Kombination eines geringeren Gewichtes bei gleichzeitig besseren mechanischen Eigenschaften wie bessere Stabilität und eine höhere Bruchfestigkeit. Insbesondere hat ein Profil z.B. U-Profil, das ein aus dem erfindungsgemäßen Band hergestelltes Gerüstband als Verstärkungseinlage aufweist eine hohe Klemmkraft. Versuche haben gezeigt, daß Abzugswerte erreicht werden, die den derzeitigen Spezifikationen entsprechen, das heißt bei einem Test eines in einer Halterung eingesetzten Profils ist die für das Herausziehen des Profils aus der Halterung erforderliche Kraft wesentlich erhöht. Die Erfindung ermöglicht insbesondere die Verwendung von sehr dünnen Bändern aus Stahl die gegenüber herkömmlichen Bändern eine gleich hohe Klemmkraft aufweisen bei einem geringerem Gewicht. Das geringere Gewicht ist insbesondere auf die vorgesehenen Aussparungen und Ausschnitte zurückzuführen. Die Erfindung ermöglicht alternativ den Einsatz von Aluminium, das bei entsprechend größerer Dicke des Bandes gleich hohe Klemmkräfte bereitstellt, wobei hier durch das geringere spezifische Gewicht von Aluminium Gewicht eingespart werden kann. Ein bevorzugtes Merkmal der Erfindung ist ein im Bereich jeder Lamelle angeordnetes Verbindungselement, das bevorzugt als schräg verlaufender Steg ausgebildet ist. Die schräge Anordnung dieses Steges vermittelt dem Band eine höhere Zugfestigkeit und gestattet gleichzeitig, daß das Band gestaucht wird, wodurch die Verarbeitung eines mit diesem Band hergestellten Profils vereinfacht wird. Die Schrägstellung des Steges kann abhängig von den gewünschten Eigenschaften variiert werden, wobei ein größerer Winkel gegenüber der Längsachse des Bandes zu einer leichteren Stauchbarkeit des Bandes führt und umgekehrt. Gemäß der vorliegenden Erfindung sind die in jedem Lamellenschenkel vorgesehenen Aussparungen und/oder die zwischen den in Längsrichtung benachbarten Lamellenschenkeln vorgesehenen Ausschnitte so gestaltet, daß sich vorzugsweise ein zum Rand hin verjüngender Aufbau bei jedem Schenkel ergibt. Vorzugsweise sind die Ausschnitte zwischen benachbarten Lamellenschenkeln als enge Spalten mit parallelen Seiten ausgebildet. Das erfindungsgemäße Band kann mit einem Stanzwerkzeug aus einem Metallband in einfacher Weise mit hoher Präzision hergestellt werden. Es ist insbesondere für die anschließende Verarbeitung zu einem Gerüstband und die sich daran anschließende Herstellung eines Profils besonders gut geeignet. Versuche haben gezeigt, daß das erfindungsgemäße Profil eine optisch ansprechende Außenfläche aufweist, wobei die im Bereich der Ausnehmungen, das heißt der Aussparungen und der Ausschnitte auftretenden Vertiefungen nur gering sind und/oder nur wenig auffallen.

Die Erfindung wird nachstehend anhand der Figuren 1 bis 3 näher erläutert.
- Figur 1: zeigt eine Aufsicht einer ersten Ausführungsform der Erfindung,
- Figur 2: zeigt eine Aufsicht einer zweiten Ausführungsform der Erfindung,
- Figur 3: zeigt alternative Ausgestaltungen der Erfindung, und
- Figur 4: zeigt eine dritte Ausführungsform der Erfindung.

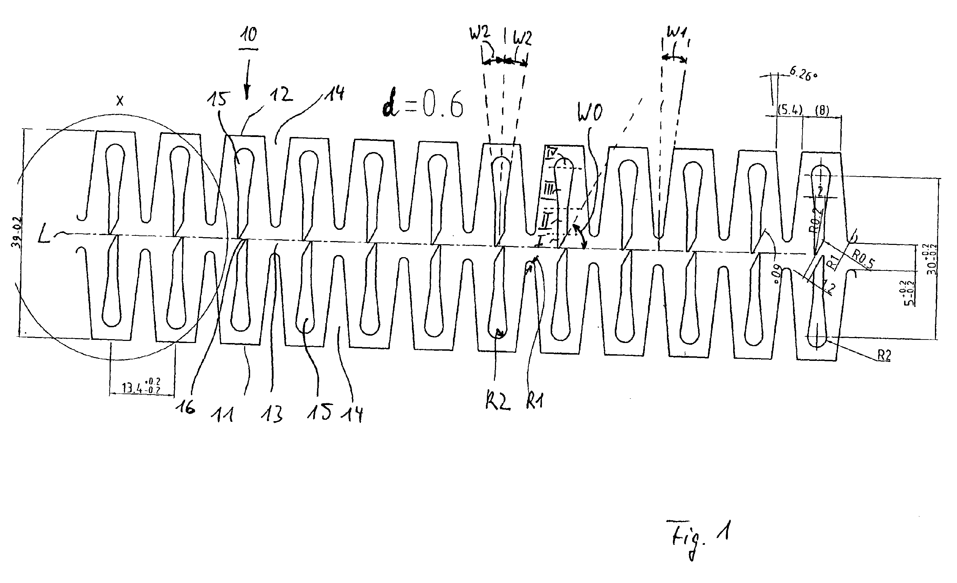

Das in Figur 1 dargestellte Lamellenband besteht aus mehreren in Richtung der Längsachse benachbarten Lamellen 10. Das Lamellenband hat eine als strichpunktierte Linie dargestellte Längsachse L. Jede Lamelle 10 weist jeweils 2 Schenkel 11, 12 auf, die einander gegenüber liegen. Benachbarte Lamellen 10 sind jeweils über ein erstes Verbindungselement 13 in Form einer Materialbrücke verbunden. Zwischen in Längsrichtung benachbarten Lamellenschenkeln 11 bzw. Lamellenschenkeln 12 sind V-förmige Ausschnitte 14 ausgebildet. Im Bereich jedes Lamellenschenkels ist eine Aussparung 15 ausgebildet. Bei dem in Figur 1 dargestellten bevorzugten Beispiel der Erfindung ist im Bereich der Längachse ein schräg verlaufendes zweites Verbindungselement 16 vorgesehen. Jede Aussparung 15 ist unterteilbar in vier Abschnitte I bis IV. Der erste Abschnitt I stellt ein Dreieck dar, das sich von der Längsachse in Richtung zum Rand des Bandes erstreckt, wobei eine Seite des Dreiecks im wesentlichen senkrecht zur Längsachse verläuft, die andere Seite des Dreiecks sich in einem Winkel W0 erstreckt. Der zweite Abschnitt II ist im wesentlichen streifenförmig mit parallelen Seiten, die im wesentlichen senkrecht zur Längsachse verlaufen. Der dritte Abschnitt III schließt sich an den zweiten Abschnitt II an und hat eine zum Rand hingesehen sich erweiternde Ausgestaltung. Die Erweiterung ist bezogen auf die Senkrechte zur Längsachse symmetrisch, wobei eine Winkel W2 zwischen der Seite und der Senkrechten eingeschlossen wird.

Der vierte Abschnitt IV der Aussparung 15 ist in dem gezeigten Beispiel halbkreisförmig und schließt sich an den dritten Abschnitt III an.

Die einander gegenüber liegenden Aussparungen 15 der beiden Lamellenschenkel 11, 12 sind im wesentlichen spiegelsymmetrisch im bezug auf die Längsachse L angeordnet, wobei der erste Abschnitt I im bezug auf die Senkrechte zur Längsachse L spiegelverkehrt angeordnet ist. Auf diese Weise ergibt sich der schräg verlaufende Steg 16.

Die Ausschnitte 14 sind beidseitig zur Längsachse symmetrisch angeordnet und enden im Bereich des ersten Verbindungselementes 13 mit einem Radius R1.

Die in Figur 1 angegebenen Bemaßungen beziehen sich auf ein Aluminiumband mit einer Dicke von 0,6 mm und einer Breite von 39 mm. Abweichungen sowohl von einzelnen hier angegebenen Werten wie auch eine proportionale Vergrößerung oder Verkleinerung liegen im Bereich der Erfindung, wobei hierzu auf die in den Ansprüchen angegebenen Bereiche besonders Bezug genommen wird.

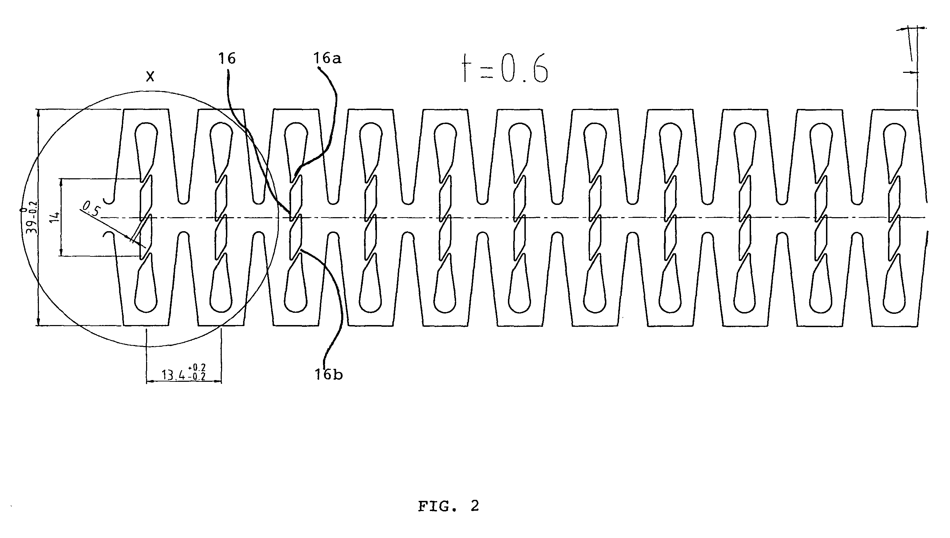

Figur 2 zeigt eine zweite Ausführungsform der Erfindung, bei der drei zweite Verbindungselemente 16, 16a und 16b vorhanden sind. Im einzelnen ist, wie bei der ersten Ausführungsform, im Bereich der Längsachse ein schräg verlaufendes zweites Verbindungselement 16 vorgesehen. An jeder Seite dieses Verbindungselements 16 ist jeweils ein weiteres zweites Verbindungselement 16a bzw. 16b angeordnet. Wie gezeigt ist jedes weitere zweite Verbindungselement im zweiten Abschnitt II vorgesehen. Alle zweiten Verbindungselemente sind vorzugsweise gleich groß und ihre Schrägen verlaufen parallel zueinander. Bezüglich der übrigen Merkmale wird auf die vorstehende Beschreibung zur ersten Ausführungsform verwiesen.

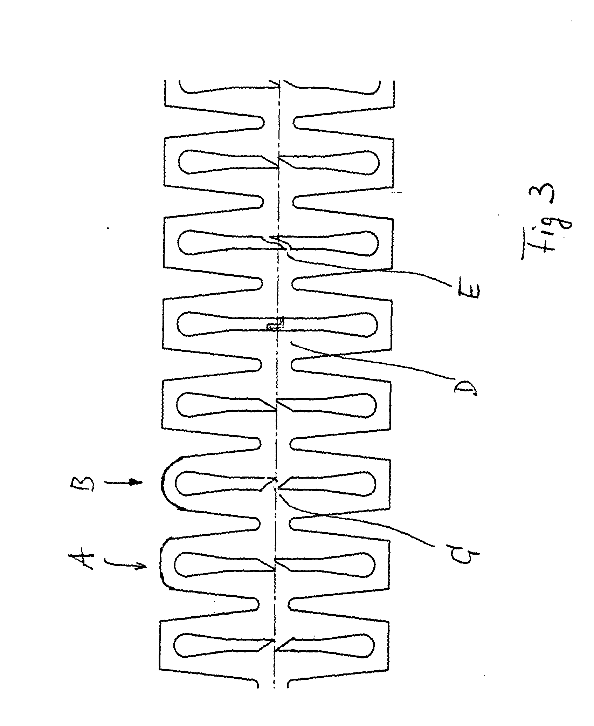

In Figur 3 sind Details A bis E dargestellt, die einzeln oder mehrere in Kombination in der ersten und zweiten vorstehend beschriebenen Ausführungsform realisiert werden können.

Detail A zeigt beispielhaft, daß der Rand jedes Lamellenschenkels an den Ecken jeweils abgerundet ausgebildet ist.

Detail B zeigt beispielhaft, daß der Rand jedes Lamellenschenkels kreisbogenförmig ausgestaltet wird.

Das Detail C zeigt eine Anordnung eines Verbindungssteges, der gegenüber der Orientierung der jeweils benachbarten Stege spiegelsymmetrisch im bezug auf die Senkrechte zur Längsachse verläuft.

Das Detail D zeigt ein zweites Verbindungselement, das eine Z-förmige Ausgestaltung aufweist. Diese Ausgestaltung ermöglicht die Bereitstellung eines Lamellenbandes mit höherer Festigkeit in Zugrichtung.

Das Detail E zeigt ein zweites Verbindungselement, das S-förmig ausgestaltet ist.

Die vorstehend beschriebenen Modifikationen sind beispielhaft in der Figur 3 gemeinsam gezeigt, wobei Abänderungen und beliebige Kombinationen im Rahmen der Erfindung liegen. Ebenso können mehrere verschiedene zweite Verbindungselemente vorgesehen werden. Das Element F in Figur 3 weist drei Verbindungselemente 16, 16a und 16b auf. Dabei weist das in der Mitte angeordnete Verbindungselement 16 in eine Richtung, die gegenüber der Längsachse einen Winkel W0ₘ einschließt, und die beiden im Abstand beidseitig angeordneten äußeren Verbindungselemente 16a bzw. 16b weisen in eine Richtung, die gegenüber der Längsachse einen Winkel W0ₐ einschließt. Die Verbindungselemente 16, 16a und 16b können jede der im Detail C, D oder E gezeigte Form haben, wobei vorzugsweise die äußeren Verbindungselemente 16a und 16b jeweils die gleiche Form haben.

Bei einem Profil, das mit einem Lamellenband hergestellt wird, können nach dem Umspritzen mit Kunststoff oder Gummi weitere Bearbeitungen durchgeführt werden. Beispielsweise kann das in dem Profil vorhandene Lamellenband derart mechanisch beansprucht werden, daß einzelne oder mehrere der zweiten Verbindungselemente gebrochen werden. Bei einer Ausgestaltung gemäß Detail D von Figur 3 könnte das zweite Verbindungselement im Bereich der beiden Ecken des Z-förmigen Verlaufs gebrochen werden. Dies hat den Vorteil, daß das Profil leichter stauchbar und verlängerbar ist und beim Verarbeiten beispielsweise im Fahrzeugbau an die vorhandenen Abmessungen einer Fahrzeugtür angepasst werden kann.

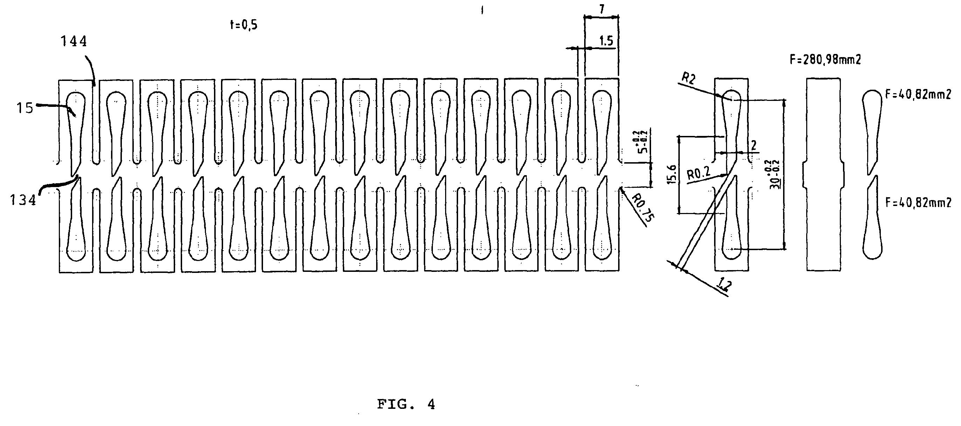

Die in Figur 4 gezeigte dritte Ausführungsform der Erfindung zeichnet sich dadurch aus, daß die Ausschnitte als enge Spalten 144 mit parallelen Seiten ausgebildet sind. Die Spalten 144 sind beiderseits jedes ersten Verbindungselements 134 symmetrisch zur Längsachse des Lamellenbandes angeordnet. Zu den weiteren Einzelheiten kann auf die vorstehende Beschreibung insbesondere in Verbindung mit Figur 1 Bezug genommen werden. Der Spalt wird im Bereich des ersten Verbindungselements halbkreisförmig ausgebildet. In dem gezeigten Beispiel endet der Spalt in Höhe des vierten Abschnitts IV an der Grenze zum dritten Abschnitt III der Aussparung 15.

Diese Ausführungsform hat bei der Verarbeitung zu einem U-Profil den Vorteil, daß der Radiusverlauf eine harmonische Linie zeigt und die Bildung von Facetten vermeiden wird.

Die beschriebenen Ausführungsformen lassen sich be Bedarf kombinieren, wodurch verschiedene Gestaltungen mit den jeweiligen Eigenschaften für gewünschte Anwendungen erzielbar sind.

## Patentansprüche

1. Band mit mehreren Lamellen, die jeweils über ein erstes Verbindungselement miteinander verbunden sind, wobei jede Lamelle zwei einander gegenüberliegende Lamellenschenkel aufweist, wobei jede Lamelle mindestens zwei Aussparungen aufweist, die sich quer zur Längsachse des Bandes strecken, wobei zwischen den Aussparungen mindestens ein zweites Verbindungselement ausgebildet ist.

2. Band nach Anspruch 1, wobei das zweite Verbindungselement in Richtung der Längsachse des Bandes eine Stauchung des Bandes und/oder eine Streckung des Bandes ermöglicht.

3. Band nach Anspruch 1 oder 2, wobei das zweite Verbindungselement ein Verbindungssteg ist, der bezogen auf die Längsachse des Bandes in einem Winkel W1 schräg angeordnet ist, wobei der Winkel W0 vorzugsweise im Bereiche von 10° bis 80°, weiter bevorzugt 30° bis 70° noch weiter bevorzugt 50° bis 65° und besonders bevorzugt bei 60° liegt.

4. Band nach einem der Ansprüche 1 bis 3, wobei das zweite Verbindungselement im Bereich der Längsachse des Bandes angeordnet ist und vorzugsweise in jeder Lamelle gleich ausgestaltet ist, insbesondere vorzugsweise das zweite Verbindungselement bei jeder Lamelle gleich orientiert ist.

5. Band nach einem der Ansprüche 1 bis 4, wobei zwischen zwei jeweils in Richtung der Längsachse des Bandes benachbarten Lamellen mindestens ein Ausschnitt angeordnet ist, der vom Rand des Bandes bis zu dem ersten Verbindungselement reicht.

6. Band nach einem der Ansprüche 1 bis 5, wobei das erste Verbindungselement im Bereich der Längsachse des Bandes angeordnet ist und vorzugsweise symmetrisch zur Längsachse beidseitig in Querrichtung jeweils eine Ausschnitt angeordnet ist, der vorzugsweise einen Spalt mit parallelen Seiten bildet, wobei die Breite des Spaltes vorzugsweise 1/10 bis 1/20 der Länge des Spaltes beträgt.

7. Band nach Anspruch 5 oder 6, wobei jeder Ausschnitt V-förmig ist und sich ausgehend vom dem ersten Verbindungselement zum Rand hin erweitert.

8. Band nach Anspruch 7, wobei jeder Ausschnitt in Bezug auf die senkrechte zur Längsachse symmetrisch ist und einen Öffnungswinkel W1 aufweist, der vorzugsweise in einem Bereich von 2° bis 30°, weiter bevorzugt 3° bis 15°, noch weiter bevorzugt 4° bis 10° und besonders bevorzugt bei 6° liegt.

9. Band nach einem der Ansprüche 5 bis 8, wobei jeder Ausschnitt im Bereich des ersten Verbindungselementes abgerundet ist, vorzugsweise einen Kreisbogen mit einem Radius R1 bildet, wobei der Radius R1 vorzugsweise im Bereich von 0,2 bis 1,5 mm, weiter bevorzugt 0,4 bis 1 mm und besonders bevorzugt bei 0,5 mm liegt.

10. Band nach einem der Ansprüche 1 bis 9, wobei die jeweiligen Aussparungen in den einander gegenüberliegenden Lamellenschenkeln bezogen auf die Senkrechte zur Längsachse des Bandes spiegelbildlich ausgestaltet sind.

11. Band nach einem der Ansprüche 1 bis 10, wobei jede Aussparung mindestens einen ersten Abschnitt und einen sich daran anschließenden zweiten Abschnitt aufweist, wobei der erste Abschnitt sich vorzugsweise von der Längsachse des Bandes in Richtung zum zweiten Abschnitt erweitert.

12. Band nach Anspruch 11, wobei der erste Abschnitt der Aussparung dreieckförmig ist mit einer ersten Seite, die sich im wesentlichen in Richtung der Senkrechten bezogen auf die Längsachse erstreckt und einer zweiten Seite, die sich in einem Winkel W0 zur Senkrechten erstreckt, der vorzugsweise im Bereich von 10° bis 80°, weiter bevorzugt 30° bis 70°, noch weiter bevorzugt 50° bis 65° und besonders bevorzugt bei 60° liegt.

13. Band nach Anspruch 12, wobei der zweite Abschnitt streifenförmig ist mit zur Senkrechten bezogen auf die Längsachse parallelen Seiten und vorzugsweise sich an den zweiten Abschnitt ein dritter Abschnitt anschließt, der sich zum Rand des Bandes hin erweitert.

14. Band nach Anspruch 13, wobei der dritte Abschnitt V-förmig ist und vorzugsweise bezogen auf die Senkrechte zur Längsachse symmetrisch ist und einen Winkel W2 einschließt, der vorzugsweise im Bereich von 2° bis 30°, weiter bevorzugt 3° bis 15°, noch weiter bevorzugt 4° bis 10° und besonders bevorzugt bei 6° liegt.

15. Band nach einem der Ansprüche 11 bis 14, wobei die Aussparung eine vierten Abschnitt aufweist und dieser Abschnitt im Abstand vom Rand des Bandes angeordnet ist und abgerundet ist, vorzugsweise halbkreisförmig ist mit einem Radius R2, der vorzugsweise im Bereich von 0,5 bis 5 mm, weiter bevorzugt 1 bis 3 mm und besonders bevorzugt bei 2 mm liegt.

16. Band nach einem der Ansprüche 1 bis 15, wobei jede Lamelle einen geraden Rand aufweist und vorzugsweise die Ecken im Bereich der Übergänge in den Ausschnitt abgerundet sind.

17. Band nach einem der Ansprüche 1 bis 16, wobei jede Lamelle im Bereich des Randes vorzugsweise 8 mm breit ist und/oder jeder Ausschnitt im Bereich des Randes 5,4 mm breit ist und/oder die Breite des Bandes 39 mm beträgt und/oder die Breite des ersten Verbindungselementes senkrecht zur Längsachse 5 mm beträgt und/oder die Breite der Aussparung mindestens 2 mm beträgt und/oder die Breite des zweiten Verbindungselementes in Richtung seiner Erstreckung 1,2 mm beträgt, wobei die vorstehend genannten Werte jeder für sich um ± 50 % variierbar sind und die vorstehend genannten Werte proportional zueinander vergrößert oder verkleinert werden können.

18. Band nach einem der Ansprüche 1 bis 17, wobei das Band eine Dicke d aufweist, die im Bereich von vorzugsweise 0,1 bis 2 mm, weiter bevorzugt 0,2 bis 1 mm und besonders bevorzugt 05, bis 0,6 mm liegt.

19. Band nach einem der Ansprüche 1 bis 18, bestehend aus Metall, vorzugsweise Stahl und besonders bevorzugt Aluminium.

20. Gerüstband mit einem U-förmigen oder V-förmigen Querschnitt, bestehend aus einem Band nach einem der Ansprüche 1 bis 19, wobei dieses Band im Bezug auf die Längsachse entsprechend gebogen ist.

21. Profil mit einem Gerüstband nach Anspruch 20, das mit Kunststoff bzw. Gummi umspritzt ist.

22. Vorrichtung zur Herstellung eines Bandes nach einem der Ansprüche 1 bis 19, **gekennzeichnet durch** ein entsprechend ausgebildetes Stanzwerkzeug.

23. Verfahren zur Herstellung eines Bandes nach einem der Ansprüche 1 bis 19 mit den Schritten Bereitstellen eines Bandes, vorzugsweise aus Metall und Stanzen der beschriebenen Aussparungen
